Europäisches Patentamt

European Patent Office

Office européen des brevets

(19)

(11)     EP 0 327 419 B2

(12)     NOUVEAU FASCICULE DE BREVET EUROPEEN

(45) Date de publication et mention de la
décision concernant l'opposition:
**12.06.2002   Bulletin 2002/24**

(45) Mention de la délivrance du brevet:
**10.05.1995   Bulletin 1995/19**

(21) Numéro de dépôt: **89400156.9**

(22) Date de dépôt: **19.01.1989**

(51) Int Cl.⁷: **C01F 7/68**, C02F 1/52

(54) **Chlorosulfate basique d'aluminium, son procédé de fabrication, son utilisation comme agent floculant**

Basisches Aluminiumchloridsulfat, Verfahren zu seiner Herstellung und seine Verwendung als Flockulierungsmittel

Basic aluminium chloride sulfate, process for its preparation, its use as a flocculating agent

(84) Etats contractants désignés:
**AT BE CH DE ES FR GB GR IT LI LU NL SE**

(30) Priorité: **29.01.1988   FR 8801056**

(43) Date de publication de la demande:
**09.08.1989   Bulletin 1989/32**

(73) Titulaire: **Atofina**
**92800 Puteaux (FR)**

(72) Inventeurs:
• **Cuer, Jean-Pierre**
**F-69340 Francheville le Haut (FR)**
• **Aubineau, Claude**
**F-69110 Sainte-Foy- les Lyon (FR)**
• **Bonnel, Claudine**
**F-95220 Herblay (FR)**

(74) Mandataire: **Eggert, Hans-Gunther, Dr.**
**Räderscheidtstrasse 1**
**50935 Köln (DE)**

(56) Documents cités:
**EP-A- 0 207 811          WO-A-81/01403**
**FR-A- 2 036 685          FR-A- 2 125 337**
**FR-A- 2 317 227          FR-A- 2 534 897**
**LU-A- 69 890**

Remarques:
Le dossier contient des informations techniques présentées postérieurement au dépôt de la demande et ne figurant pas dans le présent fascicule.

EP 0 327 419 B2

**Description**

La présente invention concerne un chlorosulfate basique d'aluminium, son procédé de fabrication et son utilisation comme agent floculant. La traitement des effluents, des eaux usées, des eaux de source ou de rivière, comprend presque toujours une étape d'élimination des matières en suspension. On connaît des produits qui ont une action coagulante sur ces matières en suspension ou en dissolution dans le système aqueux à traiter, matières qui ne peuvent décanter en un temps raisonnable par décantation naturelle. De plus ces produits transforment ces matières en flocons coagulés faciles à filtrer et à séparer de la phase liquide.

Les brevets FR 2.036.685, FR 2.226.361, FR 2.534.897 décrivent de tels produits et leurs applications. La demande de brevet européen EP 218.487 décrit un produit devant réduire la quantité d'aluminium restant dans l'eau après traitement.

On a maintenant trouvé un chlorosulfate très efficace et d'un usage très simple.

Le chlorosulfate selon l'invention est un chlorosulfate basique d'aluminium que se présente sous forme d'une solution aqueuse, caractérisé en ce qu'il comprend

un produit de formule :

$$Al_nCl_m(OH)_{3n+2k-m-2p}(SO_4)_pX_k$$

dans laquelle :

- n, m, p et k représentent les concentrations molaires (mol/l) des composants en solution
- X représente un alcalino-terreux, de préférence le calcium
- moins de 5 % des Ions $SO_4^{2-}$ sont précipitables par la réaction avec le chlorure de baryum à température ambiante, dont la basicité :

$$\frac{3n + 2k - m - 2p}{3n}$$

est comprise entre 50 et 70 %.

Avantageusement on choisit les produits selon la formule brute précédente, dans lesquels le rapport équivalent aluminium sur chlore, c'est-à-dire 3 n/m est inférieur à 2,8 et de préférence inférieur à 2,75.

Bien qu'on puisse avoir une grande plage de basicité, on utilise habituellement les produits de basicité comprise entre 50 et 65 %. Selon les applications du produit,, on peut préférer différentes valeurs de basicité. En particulier dans la préparation de l'eau potable, on a observé des valeurs d'aluminium résiduel d'autant plus faibles que la basicité est plus élevée.

La non précipitation par les sels de baryum de la majorité des ions $SO_4^{2-}$ du produit signifie que ce sulfate est complexé. La détermination de la teneur totale A en sulfate contenu dans le produit est effectuée d'une manière habituelle par précipitation du sulfate de baryum à l'aide d'une solution de chlorure de baryum et d'acide chlorhydrique ajoutée à l'échantillon porté à l'ébullition. Lorsque le chlorure de baryum est introduit à température ambiante (soit entre 15 et 25°C) dans un échantillon non acidifié, en quantité stoechiométrique par rapport aux ions $SO_4^{2-}$ présents dans le produit, le poids du précipité sec formé après 1 heure est en relation avec la teneur B en ions $SO_4^{2-}$ dits "non complexés".

La différence A-B est dite "teneur en ions $SO_4^{2-}$ complexés".

La produit de l'invention qui se présente sous forme d'une solution aqueuse contenant entre 5 et 15 % en poids exprimé en $Al_2O_3$ est mélangé au chlorure de baryum en solution aqueuse (par exemple entre 5 et 20 g/l). On homogénéïse et on laisse le précipité se former pendant environ 1 heure, puis on filtre sur creuset filtrant de porosité n° 4. Toutes ces opérations depuis le mélange du chlorosulfate avec le $BaCl_2$ jusqu'à la filtration ont lieu à température ambiante, c'est-à-dire entre 15 et 25 °C. Le filtrat contient encore les ions $SO_4^{2-}$ du produit de l'invention qui n'ont pas précipité sous forme de $BaSO_4$ et qui sont donc complexés. Pour trouver cette quantité de $SO_4^{2-}$ complexé, on détruit le produit en ajoutant de l'acide chlorhydrique dans le filtrat et on porte à ébullition. On précipite alors les ions $SO_4^{2-}$ par du $BaCl_2$ en solution aqueuse entre 5 et 15 % en poids. La mesure de la masse de $BaSO_4$ du précipité donne par comparaison avec la totalité de $SO_4^{2-}$ du produit le pourcentage des ions $SO_4^{2-}$ précipitables par la réaction avec le chlorure de baryum à température ambiante.

Les produits ont moins de 5 % des ions $SO_4^{2-}$ précipitables dans les conditions habituelles, c'est-à-dire que plus de 95 % des $SO_4^{2-}$ sont complexés.

La présente invention concerne aussi un procédé de fabrication de chlorosulfate basique caractérisé en ce que :

a) on met en contact en solution aqueuse de l'oxyde d'aluminium, de l'acide chlorhydrique et de l'acide sulfurique dans les proportions suivantes:

$$1,89 < \frac{HCl}{Aluminium} < 2,44$$

$$1,37 < \frac{H_2SO_4}{Aluminium} < 1,73, \text{ de préférence } 1,42 < \frac{H_2SO_4}{Aluminium} < 1,68,$$

l'aluminium étant exprimé en $Al_2O_3$, les rapports étant molaires,
b) on met en contact cette solution avec un composé alcalino-terreux, le rapport molaire entre le composé alcalino-terreux et l'aluminium exprimé en $Al_2O_3$ étant compris entre 1,63 et 1,70,
c) on élimine le sulfate alcalino-terreux.

L'étape a) est réalisée par la mise en contact d'oxyde d'aluminium avec de l'acide chlorhydrique et de l'acide sulfurique en milieu aqueux. Par oxyde d'aluminium, on entend tous les produits du type alumine ou hydroxyde d'aluminium. On préfère utiliser l'alumine issue du procédé Bayer ou les hydroxydes d'aluminium sous-produits dans les traitements de surface de l'aluminium.

Avantageusement on attaque l'oxyde d'aluminium par un mélange d'acide chlorhydrique concentré et d'acide sulfurique concentré à une température entre 70 et 115°C. Cette plage de température n'est pas essentielle, elle correspond seulement à une durée de réaction d'une heure ou deux compatible avec la mise en oeuvre industrielle du procédé. On peut mettre l'oxyde d'aluminium dans un mélange des acides ou faire réagir l'oxyde d'aluminium avec l'un puis l'autre acide, ou ajouter les acides en plusieurs fois. On préfère attaquer l'oxyde d'aluminium par un mélange d'acide chlorhydrique et sulfurique, puis une partie de l'oxyde d'aluminium ayant été dissoute, on ajoute un complément d'acide sulfurique concentré.

Avantageusement on utilise de l'acide chlorhydrique en solution supérieure à 20 % en poids et de préférence une solution à 33 % en poids. Il est avantageux aussi d'utiliser de l'acide sulfurique à au moins 60 % en poids. La quantité d'acide chlorhydrique, exprimée en moles, est comprise entre 1,89 et 2,44 fois la quantité d'oxyde d'aluminium exprimée en mole d'$Al_2O_3$, et de préférence entre 1,95 et 2,40.

De même la quantité d'acide sulfurique, exprimée en moles, (utilisée en une ou plusieurs fois) est comprise entre 1,37 et 1,73 fois la quantité d'oxyde d'aluminium exprimée en moles d'$Al_2O_3$, et de préférence entre 1,42 et 1,68.

La solution chlorosulfurique d'aluminium de l'étape a) est ensuite mise en contact avec le composé alcalino-terreux. Ce composé alcalino-terreux peut être choisi, par exemple, parmi le carbonate, l'hydroxyde, l'oxyde ou le bicarbonate de calcium. On peut utiliser un mélange de ces produits par exemple du carbonate de calcium et de l'hydroxyde de calcium, on préfère le carbonate de calcium. Avantageusement le composé alcalino-terreux se présente sous forme divisée, telle qu'une poudre. Bien qu'on puisse opérer à toute température, on préfère porter la solution chlorosulfurique d'aluminium entre 60 et 100°C pour la mettre en contact avec le composé alcalino-terreux.

Cette mise en contact se fait généralement en 10 ou 30 minutes, ce qui correspond à des conditions technologiques habituelles, mais on ne sortirait pas du cadre de l'invention en opérant en quelques minutes ou en plusieurs heures.

La quantité du composé alcalino-terreux, exprimée en moles, est comprise entre 1,63 et 1,70 fois la quantité d'oxyde d'aluminium introduite dans l'étape a), exprimée en moles d'$Al_2O_3$, et de préférence entre 1,65 et 1,68. On peut, quand tout le composé alcalino-terreux a été mélangé avec la solution chlorosulfurique d'aluminium, laisser le mélange sous agitation. La température peut être quelconque, généralement la température s'établit entre 30 et 60 ° C.

Avantageusement cette fin de l'étape b) dure de 15 minutes à 2 heures. Il suffit ensuite de séparer le sulfate alcalino-terreux. On peut utiliser les moyens habituels, tels que filtration, centrifugation. Cette séparation se fait de préférence au dessus de la température ambiante, par exemple entre 30 et 60 °C.

Le filtrat contient le chlorosulfate basique de l'invention en solution dans l'eau. On peut modifier la concentration par addition d'eau. La présentation du produit de l'invention se fait sous forme de cette solution contenant, en poids, entre 5 % et 15 % d'aluminium exprimée sous forme d'$Al_2O_3$. Cette forme présente l'avantage d'une stabilité (non apparition de phase solide) pendant plusieurs mois à la température ambiante.

La présente invention concerne aussi l'application de ces produits comme agents coagulants et floculants pour le traitement des eaux, en particulier la purification des eaux en faire de l'eau potable.

Parmi les chlorosulfates basiques d'aluminium selon l'invention, ceux qui simultanément

- ont une basicité supérieure à 60%
- et dont le rapport pondéral Cl/($SO_4^{2-}$ total) est compris entre 4,5 et 8, présentent, lorsqu'ils sont mis en oeuvre dans le cadre de procédés de traitement de milieux aqueux, un taux de traitement à l'optimal de floculation inférieur pour des propriétés voisines concernant l'aluminium restant en solution (Al résiduel).

Les exemples suivants illustrent l'invention sans la limiter.

## EXEMPLE 1 : PREPARATION D'UN PRODUIT SELON L'INVENTION

étape a) : Dans un réacteur en verre contenant 3 moles d'HCl sous forme de 331,9 g d'une solution à 33 % et 1,45 moles d'$H_2SO_4$ à 78 %, on verse 3,09 moles d'une poudre à 99 % d'Al(OH)$_3$. On chauffe à 70°C puis la température se stabilise à 102°C. On dilue par 374 g d'eau puis on ajoute 1 mole d'acide sulfurique à 78 %. La température monte à 112°C en 20 minutes. La durée de cette étape a été d'environ 2 heures.

étape b) : On laisse refroidir à 93°C, puis on introduit en 30 minutes 2,60 moles de CaCO$_3$, soit 481,5 g d'une bouillie de CaCO$_3$ à 54 %. On laisse le réacteur sous agitation pendant 1 heure 30, la température est devenue 61°C.

étape c) : On laisse refroidir à 40°C puis on filtre dans un appareil de filtration sous vide. On lave le gâteau par 100 g d'eau. Le gâteau sec pèse 362 g et contient en poids 7,73 % d'aluminium exprimée en Al$_2$O$_3$, 53,4 % de SO$_4^{2-}$, 1,35 % de Cl$^-$, le complément étant du calcium. On a recueilli 1111 g de filtrat de densité 1,224 qu'on dilue par 109 g d'eau. On obtient le produit qui se présente sous forme d'une solution.

La solution pèse 1220 g, a une densité de 1,201 et contient en poids 10,09 % d'Al exprimé sous forme Al$_2$O$_3$, 8,11 % de Cl$^-$, 1,83 % de SO$_4^{2-}$, 1,78 % de SO$_4^{2-}$ complexé et 1,08 % de Ca$^{2+}$ c'est-à-dire que le rapport (équivalent Al)/Cl est 2,6, 97,3 % des ions SO$_4^{2-}$ sont complexés.

La basicité est 64,18 % et le rapport pondéral Cl/(SO$_4^{2-}$ total) est 4,43.

## EXEMPLE 2 : PREPARATION D'UN AUTRE PRODUIT SELON L'INVENTION

On opère comme dans l'exemple 1, mais en utilisant d'autres proportions de réactifs. On part toujours de 3,09 moles d'Al(OH)$_3$, la durée de l'étape a) est 2 heures. L'étape b) dure 2 heures et commence à 90°C.

Etape a) :

Température finale : 113,4°C
HCl : 3 moles
$H_2SO_4$ : 2,6 moles

Etape b) :

Température finale : 63 °C
CaCO$_3$ : 2,6 moles sous forme de bouillie à 54%

Après séparation du sulfate de calcium (étape c) et dilution à l'eau, on obtient le produit suivant, les pourcentages étant en poids de la solution.

| Pourcentages de la solution | |
|---|---|
| Al$_2$O$_3$ | 10,59 % |
| Cl | 8,35 % |
| SO$_4^{2-}$ total | 2,13 % |
| SO$_4^{2-}$ complexé | 2,13 % |
| Ca résiduel | 0,77 % |
| Equivalent Al/Cl | 2,65 |
| Basicité | 61,29 |
| Ions SO$_4^{2-}$ complexés | 100 % |
| Cl/(SO$_4^{2-}$ total) | 3,92 |

## EXEMPLE 3 : PREPARATION D'UN AUTRE PRODUIT SELON L'INVENTION

On opère comme dans l'exemple 1, mais en utilisant d'autres proportions de réactifs. On part de 3,09 moles d'Al(OH)$_3$, la durée de l'étape a) est 2 heures. L'étape b) dure 2 heures et commence à 90°C.

Etape a) :

Température finale : 112 ° C
    HCl : 2,81 moles
    H$_2$SO$_4$ : 2,25 moles

Etape b) :

Température 62°C
    finale :
    CaCO$_3$ : 2,38 moles sous forme de bouillie à 54 %
Après séparation du sulfate de calcium (étape c) et dilution à l'eau, on obtient le produit suivant, les pourcentages étant en poids de la solution.

| Pourcentages de la solution | |
|---|---|
| Al$_2$O$_3$ | 9,96 % |
| Cl | 7,72 % |
| SO$_4^{2-}$ total | 1,50 % |
| SO$_4^{2-}$ complexé | 1,50 % |
| Ca résiduel | 0,66 % |
| Equivalent Al/Cl | 2,69 |
| Basicité | 63,2 % |
| Ions SO$_4^{2-}$ complexés | 100 % |
| Cl/(SO$_4^{2-}$ total) | 5,15 |

## EXEMPLE 4 : PRODUITS NON CONFORMS A L'INVENTION

Leur formule brute s'exprime sous la même forme que celles des produits de l'invention.

4a) On réalise un chlorosulfate basique d'aluminium selon l'art antérieur, que se présente sous forme d'une solution contenant en % poids:

| Al | 10,3 (exprimé en Al$_2$O$_3$) |
|---|---|
| Cl | 9,09 |
| SO$_4^{2-}$ total | 2,49 |
| Basicité | 51,32 %, la basicité est définie comme pour le produit de l'invention. |

La concentration en ions SO$_4^{2-}$ complexés est de 1,64, c'est-à-dire que

$$\frac{1,64}{2,49}$$

soit 65,9 % du sulfate est complexé. Le rapport (Al équiv.)/Cl est 2,37 et Cl/(SO$_4^{2-}$ total) est 3,65. Le produit est fabriqué par réaction d'alumine avec HCl et H$_2$SO$_4$ comme dans le brevet FR 2.036.685.
4b) On réalise un autre chlorosulfate basique d'aluminium qui se présente sous forme d'une solution contenant en % poids :

| Al | 8,3 (exprimé en Al$_2$O$_3$) |
|---|---|
| Cl | 5,21 |
| SO$_4^{2-}$ total | 5,02 |

(suite)

| La basicité est | 49,8 % |
|---|---|

La concentration en ions $SO_4^{2-}$ complexés est de 1,5, c'est-à-dire que

$$\frac{1,5}{5,02}$$

soit 29,9 % du sulfate est complexé. Le rapport (Al équiv.)/Cl est 3,32 et Cl/($SO_4^{2-}$ total) est 1,04.

Ce produit est fabriqué par un procédé qu comprend une étape de préparation d'une bouillie de chlorure de calcium et de carbonate de calcium (bouillie chlorocarbonatée), une étape de mise en contact de la bouillie chlorocarbonatée avec du sulfate d'aluminium, puis une étape de séparation du mélange réactionnel ainsi obtenu, ce par quoi on sépare un gâteau de sulfate de calcium et un filtrat contenant le chlorosulfate basique d'aluminium. Ce procédé est décrit dans la demande de brevet européen EP 218.487.

On a mesuré sur ce produit par diffusion quasi élastique de la lumière un diamètre hydrodynamique apparent ΦZ de 700 Å.

4c) On réalise un produit de même genre qu'en 4b). Les concentrations sont :

| Al | 8,55 (en $Al_2O_3$) |
|---|---|
| Cl | 6,82 |
| $SO_4^{2-}$ total | 2,74 |
| $SO_4^{2-}$ complexé | 1,93 |
| La basicité est | 57 % |

Le pourcentage de $SO_4^{2-}$ complexé est donc

$$\frac{1,93}{2,74} = 70,4 \text{ %}$$

et les rapports (équivalent Al)/Cl : 2,62 et Cl/($SO_4^{2-}$ total) : 2,49.

EXEMPLE 5

Cet exemple illustre l'application du produit selon l'invention.

On compare le produit de l'invention avec les produits de l'exemple 4.

On effectue des essais en jar-tests selon le mode opératoire suivant :

- becher d'un litre,
- température 15°C
- eau de rivière,
- jar-test HYDROCURE type SLH6
- agitation rapide pendant 1 mn 30' après addition du floculant puis agitation lente, c'est-à-dire suffisante pour qu'il y ait coalescence, mais en évitant la décantation des flocs.

On laisse ensuite décanter 3, 10 ou 20 mn selon les tableaux 1 à 7.

- mesure de l'aluminium restant dans l'eau par une méthode colorimétrique au chromazurol, après filtration de l'eau décantée 20 mn sur filtre à 0,45 μm.

Les tableaux suivants indiquent le type d'eau à traiter, son PH, la turbidité exprimée en NTU et les matières organiques en mg d'oxygène par litre d'eau.

Le produit utilisé est repéré par le numéro de l'exemple. On indique la turbidité de l'eau en surface après x minutes de décantation, le PH final, les matières organiques et l'aluminium restant dans l'eau (Al résiduel) en ppb (μg/litre).

Les tableaux 1 à 7 présentent les résultats.

TABLEAU 1

Type d'eau : eau de Seine

PH              7,97

Turbidité       42 NTU

Matières organiques (M.O.) 6,96 mg $O_2$/1

| PRODUIT (N° de l'exemple) | QUANTITE EN g/m³ (en $Al_2O_3$) | TURBIDITE DU SURNAGEANT | | | PH final | M.O. | Al rési- duel |
|---|---|---|---|---|---|---|---|
| | | 3' | 10' | 20' | | | |
| 4a | 4 | 2,1 | 1,45 | 1,3 | 7,7 | 2,76 | 148 |
| 1 | 4 | 1,8 | 1,35 | 1,2 | 7,84 | 2,72 | 97 |

TABLEAU 2

Type d'eau : eau de Marne

PH              8,02

Turbidité       60 NTU

Matières organiques (M.O.) 6,68 mg $O_2$/1

| PRODUIT (N° de l'exemple) | QUANTITE EN g/m³ (en $Al_2O_3$) | TURBIDITE DU SURNAGEANT | | | PH final | M.O. | Al rési- duel |
|---|---|---|---|---|---|---|---|
| | | 3' | 10' | 20' | | | |
| 4a | 3 | 1,7 | 1,6 | 1,5 | 7,78 | 2,94 | 152 |
| 4c | 3 | 1,7 | 1,55 | 1,45 | 7,80 | 2,78 | 152 |
| 1 | 3 | 1,8 | 1,6 | 1,4 | 7,80 | 2,66 | 118 |

TABLEAU 3

Type d'eau : eau de Marne

PH 8,26 (a été modifiée par addition de soude)

Turbidité 55 NTU

Matières organiques (M.O.) 5,94 mg $O_2/l$

| PRODUIT (N° de l'exemple) | QUANTITE EN $g/m^3$ (en $Al_2O_3$) | TURBIDITE DU SURNAGEANT | | | PH final | M.O. | Al rési-duel |
|---|---|---|---|---|---|---|---|
| | | 3' | 10' | 20' | | | |
| 4a | 3 | 1,55 | 1,55 | 1,35 | 7,90 | 2,12 | 216 |
| 4c | 3 | 1,6 | 1,55 | 1,3 | 7,92 | 2,14 | 212 |
| 1 | 3 | 1,7 | 1,55 | 1,45 | 7,97 | 2,08 | 165 |

TABLEAU 4

Type d'eau : eau de l'Oise

PH 7,99

Turbidité 9,9 NTU

Matières organiques (M.O.) 5,64 mg $O_2/l$

| PRODUIT (N° de l'exemple) | QUANTITE EN $g/m^3$ (en $Al_2O_3$) | TURBIDITE DU SURNAGEANT | | | PH final | M.O. | Al rési-duel |
|---|---|---|---|---|---|---|---|
| | | 3' | 10' | 20' | | | |
| 1 | 3 | 1 | 0,88 | 0,80 | 7,88 | 2,94 | 89 |
| 4a | 3 | 0,98 | 0,93 | 0,91 | 7,84 | 3,10 | 123 |
| 4b | 3 | 1,2 | 1,02 | 0,91 | 7,82 | 3,08 | 120 |

## TABLEAU 5

Type d'eau : eau de l'Oise

PH                8,24 (après addition de soude)

Turbidité     21 NTU

Matières organiques (M.O.) 6,92 mg $O_2$/1

| PRODUIT (N° de l'exemple) | QUANTITE EN g/m³ (en $Al_2O_3$) | TURBIDITE DU SURNAGEANT | | | PH final | M.O. | Al rési-duel |
|---|---|---|---|---|---|---|---|
| | | 3' | 10' | 20' | | | |
| 1 | 3 | 0,94 | 0,83 | 0,72 | 8,08 | 2,86 | 163 |
| 4a | 3 | 1,05 | 1 | 0,99 | 8,03 | 2,86 | 242 |
| 4b | 3 | 1,25 | 0,99 | 0,93 | 8,02 | 2,88 | 238 |

On voit que même avec une eau très basique le produit de l'invention permet d'être sous la concentration maximum admissible de 200 µg/l indiquée dans la Directive du Conseil Européen du 15 Juillet 1980.

## TABLEAU 6

Type d'eau : eau de Seine

PH                7,97

Turbidité     42 NTU

Matières organiques (M.O.) 6,96 mg $O_2$/1

| PRODUIT (N° de l'exemple) | QUANTITE EN g/m³ (en $Al_2O_3$) | TURBIDITE DU SURNAGEANT | | | PH final | M.O. | Al rési-duel |
|---|---|---|---|---|---|---|---|
| | | 3' | 10' | 20' | | | |
| 4a | 4 | 2,1 | 1,45 | 1,3 | 7,7 | 2,76 | 148 |
| 2 | 4 | 2,2 | 1,2 | 1,3 | 7,77 | 2,72 | 117 |
| 1 | 4 | 3 | 1,4 | 1,3 | 7,81 | 2,72 | 104 |

**EP 0 327 419 B2**

TABLEAU 7

Type d'eau : eau de Marne

PH                8,02

Turbidité        60 NTU

Matières organiques (M.O.) 6,68 mg $O_2$/1

| PRODUIT (N° de l'exemple) | QUANTITE EN g/m³ (en $Al_2O_3$) | TURBIDITE DU SURNAGEANT | | | PH final | M.O. | Al rési-duel |
|---|---|---|---|---|---|---|---|
| | | 3' | 10' | 20' | | | |
| 4a | 3 | 1,7 | 1,6 | 1,5 | 7,78 | 2,94 | 152 |
| 4c | 3 | 1,7 | 1,55 | 1,45 | 7,80 | 2,78 | 152 |
| 2 | 3 | 1,8 | 1,6 | 1,5 | 7,82 | 2,72 | 128 |
| 1 | 3 | 1,8 | 1,6 | 1,4 | 7,80 | 2,66 | 118 |

EXEMPLE 6

Cet exemple consiste à comparer les résultats de turbidité et d'aluminium résiduel des produits selon l'invention des exemples 1 et 3 lorsqu'on les utilise à des taux de traitements faibles : 1, 1,5, 2 et 3 g/m³ en $Al_2O_3$.
On effectue des essais en jar-test selon le mode opératoire décrit dans l'exemple 5 dans une eau de type eau de Seine.
Le tableau 8 indique les valeurs de pH, de turbidité et de quantité de matières organiques de l'eau de Seine que l'on a mesurées avant traitement à l'aide des produits de l'exemple 1 et 3 (essais A à P).

TABLEAU 8

| TEST N° | pH EAU | TURBIDITE (NTU) | MO (mg$O_2$/l) |
|---|---|---|---|
| A | | | 5,88 |
| B-C | | | 6,08 |
| D-E | 8,02 | 8,2 | |
| F-G | 8,05 | 7,4 | |
| H-I | | 10 | 5,88 |
| J-K | | 10 | 5,48 |
| L | 8,1 | 12 | 4,68 |
| M-N | 8 | 8,3 | |
| O-P | 7,91 | 12 | |

Le tableau 9 reprend les valeurs moyennes des résultats obtenus en prenant pour référence le produit de l'exemple 3. Les pourcentages qui apparaissent sont obtenus de la façon suivante :

écart du paramètre x (%) =

$$\frac{\text{valeur de x pour l'exemple i}}{\text{valeur x pour l'exemple 3}} \times 100 - 100$$

**10**

avec i = 1 ou 3

N.B. Les écarts ne sont véritablement significatifs que lorsque leur valeur absolue est supérieure ou égale à 5 %.

TABLEAU 9

| PRODUIT (N° de l'exemple) | QUANTITE EN $g/m^3$ ($Al_2O_3$) | ECART DE | | | | |
|---|---|---|---|---|---|---|
| | | TURBIDITE DU SURNAGEANT (%) | | | M.O (%) | Al résiduel (%) |
| | | 3' | 10' | 20 | | |
| 1 | | 14 | 9,3 | 8,9 | -0,7 | - |
| 3 | 1 | 0 | 0 | 0 | 0 | 0 |
| 1 | | 18 | 9,2 | 6 | 1,8 | - 10 |
| 3 | 1,5 | 0 | 0 | 0 | 0 | 0 |
| 1 | | 20 | 9,9 | 3,3 | | |
| 3 | 2 | 0 | 0 | 0 | 0 | 0 |
| 1 | | 5,25 | 0,34 | -2,4 | - | - |
| 3 | 3 | 0 | 0 | 0 | 0 | 0 |

**Revendications**

1. Chlorosulfate basique d'aluminium qui se présente sous forme d'une solution aqueuse, **caractérisé en ce qu'**il comprend:

   - un produit de formule:

$$Al_nCl_m(OH)_{3n+2k-m-2p}(SO_4)_pX_k$$

   dans laquelle:

   • n, m, p et k représentent les concentrations molaires (mol/l) des composants en solution,
   • X représente un alcalino-terreux, de préférence le calcium,
   • moins de 5 % des ions $SO_4^{2-}$ sont précipitables par la réaction avec le chlorure de baryum à température ambiante,
   dont la basicité:

$$\frac{3n + 2k - m - 2p}{3n}$$

   est comprise entre 50 et 70 %.

2. Produit selon la revendication 1, **caractérisé en ce que** le rapport (équivalent Al)/Cl, 3n/m, est inférieur à 2.8.

3. Produit selon la revendication 1 ou 2, **caractérisé en ce que** la basicité est comprise entre 50 et 65 %.

**4.** Produit selon l'une des revendications à 3, **caractérisé en ce que** la rapport (équivalent Al)/Cl est inférieur à 2.75.

**5.** Produit selon l'une des revendications 1 à 4, **caractérisé en ce que**

- sa basicité est supérieure ou égale à 60 %
- le rapport pondéral $Cl/SO_4$ est compris entre 4,5 et 8.

**6.** Procédé de fabrication de chlorosulfate basique selon la revendication 1, **caractérisé en ce que**:

a) on met en contact en solution aqueuse de l'oxyde d'aluminium, de l'acide chlorhydrique et de l'acide sulfurique dans les proportions suivantes:

$$1,89 < \frac{HCl}{Aluminium} < 2,44$$

$$1,37 < \frac{H_2SO_4}{Aluminium} < 1,73, \text{ de préférence } 1\ 42 < \frac{H_2SO_4}{Aluminium} < 1,68,$$

l'aluminium étant exprimé en $Al_2O_3$, les rapports étant molaires,
b) on met en contact cette solution avec un composé alcalino-terreux, le rapport molaire entre le composé alcalino-terreux et l'aluminium exprimé en $Al_2O_3$ étant compris entre 1,63 et 1,70,
c) on élimine le sulfate alcalino-terreux,

**7.** Procédé selon la revendication 6, **caractérisé en ce que** le composé alcalino-terreux est choisi parmi le carbonate, l'hydroxyde, l'oxyde, le bicarbonate de calcium.

**8.** Procédé de traltement d'un milieu aqueux, **caractérisé en ce qu'**on utilise un produit selon l'une des revendications 1 à 5.

**Claims**

**1.** Basic aluminium chlorosulphate in the form of an aqueous solution, **characterized in that** it comprises:

- a product of formula:

$$Al_nCl_m(OH)_{3n+2k-m-2p}(SO_4)_pX_k$$

in which:

- n, m, p and k denote the molar concentrations (mol/l) of the components in solution
- X denotes an alkaline-earth substance, preferably calcium
- less than 5 % of the $SO_4^{2-}$ ions can be precipitated by reacting with barium chloride at ambient temperature, the basicity:

$$\frac{3n + 2k - m - 2p}{3n}$$

of which is between 50 and 70 %.

**2.** Product according to Claim 1, **characterized in that** the ratio (Al equivalent)/Cl, 3n/m, is lower than 2.8.

**3.** Product according to Claim 1 or 2, **characterized in that** the basicity is between 50 and 65 %.

**4.** Product according to one of Claims 1 to 3, **characterized in that** the ratio Al equivalent/Cl is lower than 2.75.

**5.** Product according to one of Claims 1 to 4, **characterized in that**

- its basicity is higher than or equal to 60 %
- the weight ratio $Cl/SO_4$ is between 4.5 and 8.

**6.** Process for the manufacture of basic aluminium chlorosulphate according to Claim 1, **characterized in that**

a) aluminium oxide, hydrochloric acid and sulphuric acid are brought into contact in aqueous solution in the following proportions:

$$1{,}89 < \frac{HCl}{aluminium} < 2{,}44$$

$$1{,}37 < \frac{H_2SO_4}{aluminium} < 1{,}73, \text{ preferably } 1{,}42 < \frac{H_2SO_4}{aluminium} < 1{,}68,$$

the aluminium being expressed as $Al_2O_3$, the ratios being molar,
b) this solution is brought into contact with an alkaline-earth metal compound, the molar ratio of the alkaline-earth metal compound to the aluminium expressed as $Al_2O_3$ being between 1.63 and 1.70,
c) the alkaline-earth metal sulphate is removed.

**7.** Process according to claim 6, **characterized in that** the alkaline-earth metal compound is selected from calcium carbonate, hydroxide, oxide and bicarbonate.

**8.** Process for treatment of an aqueous medium, **characterized in that** a product according to one of Claims 1 to 5 is used.

**Patentansprüche**

**1.** Basisches Aluminiumchlorosulfat in Form einer wäßrigen Lösung, **dadurch gekennzeichnet, daß** es folgendes umfaßt:

- ein Produkt der Formel

$$Al_nCl_m(OH)_{3n+2k-m-2p}(SO_4)_pX_k$$

in der

- n, m, p und k die molaren Konzentrationen (mol/l) der Lösungsbestandteile darstellen,
- X ein Erdalkalimetall, vorzugsweise Calcium, darstellt,
- weniger als 5 % der $SO_4^{2-}$-Ionen durch Reaktion mit Bariumchlorid bei Umgebungstemperatur fällbar sind, wobei die Basizität

$$\frac{3n + 2k - m - 2p}{3n}$$

zwischen 50 und 70 % liegt.

**2.** Produkt nach Anspruch 1, **dadurch gekennzeichnet, daß** das Verhältnis (Al-Äquivalent)/Cl, 3n/m, unter 2,8 liegt.

**3.** Produkt nach Anspruch 1 oder 2, **dadurch gekennzeichnet, daß** die Basizität zwischen 50 und 65 % liegt.

**4.** Produkt nach einem der Ansprüche 1 bis 3, **dadurch gekennzeichnet, daß** das Verhältnis (Al-Äquivalent)/Cl unter 2,75 liegt.

**5.** Produkt nach einem der Ansprüche 1 bis 4, **dadurch gekennzeichnet, daß**

- seine Basizität größer oder gleich 60 % ist,
- das Gewichtsverhältnis Cl/SO$_4$ zwischen 4,5 und 8 liegt.

**6.** Verfahren zur Herstellung von basischem Chlorosulfat nach Anspruch 1, **dadurch gekennzeichnet, daß**

a) Aluminiumoxid, Salzsäure und Schwefelsäure mit den folgenden Verhältnissen in wäßriger Lösung in Kontakt gebracht werden:

$$1,89 < \frac{HCl}{Aluminium} < 2,44$$

$$1,37 < \frac{H_2SO_4}{Aluminium} < 1,73, \text{ vorzugsweise } 1,42 < \frac{H_2SO_4}{Aluminium} < 1,68,$$

wobei Aluminium als Al$_2$O$_3$ berechnet ist und die Verhältnisse molbezogen sind,
b) diese Lösung mit einer Erdalkaliverbindung in Kontakt gebracht wird, wobei das Molverhältnis zwischen der Erdalkaliverbindung und dem als Al$_2$O$_3$ berechneten Aluminium zwischen 1,63 und 1,70 liegt und
c) das Erdalkalimetallsulfat entfernt wird.

**7.** Verfahren nach Anspruch 6, **dadurch gekennzeichnet, daß** die Erdalkalimetallverbindung aus Calciumcarbonat, -hydroxid, -oxid, und -bicarbonat ausgewählt ist.

**8.** Verfahren zur Behandlung eines wäßrigen Mediums, **dadurch gekennzeichnet, daß** ein Produkt nach einem der Ansprüche 1 bis 5 verwendet wird.